# EUROPÄISCHE PATENTSCHRIFT

(11) **EP 3 824 521 B1**
(45) Veröffentlichungstag und Bekanntmachung des Hinweises auf die Patenterteilung: **30.08.2023**
(21) Anmeldenummer: 19737738.5
(22) Anmeldetag: 09.07.2019
(51) Int. Cl.: H02G 1/12

(54) **VORRICHTUNG UND VERFAHREN ZUM BEARBEITEN EINES ENDES EINES ELEKTRISCHEN KABELS**
DEVICE AND METHOD FOR PROCESSING AN END OF AN ELECTRICAL CABLE
DISPOSITIF ET PROCÉDÉ DE TRAITEMENT D'UNE EXTRÉMITÉ D'UN CÂBLE ÉLECTRIQUE

(30) Priorität: 16.07.2018 DE 102018117132
(43) Veröffentlichungstag der Anmeldung: 26.05.2021
(73) Patentinhaber: Metzner Maschinenbau GmbH, 89231 Neu-Ulm (DE)
(72) Erfinder: BAUMGAERTNER, Andreas, 89077 Ulm (DE); GLOGGER, Karl, 89297 Roggenburg (DE)
(74) Vertreter: Lorenz, Markus
(86) Internationale Anmeldenummer: PCT/EP2019/068385
(87) Internationale Veröffentlichungsnummer: WO 2020/016056

(56) Entgegenhaltungen:
- EP-A1- 2 912 736
- EP-A2- 1 237 236
- JP-A- 2005 080 459
- US-A1- 2005 170 696

## Beschreibung

Die Erfindung betrifft eine Vorrichtung zum Bearbeiten eines Endes eines elektrischen Kabels nach dem Oberbegriff von Anspruch 1.

Die Erfindung betrifft auch ein Verfahren zum maschinellen Bearbeiten eines Endes eines elektrischen Kabels gemäß dem Oberbegriff von Anspruch 8.

Die Erfindung betrifft außerdem ein Kabelkonfektionierungssystem.

Bei der Konfektionierung von elektrischen Kabeln werden deren Leiter typischerweise mit einem Steckverbinder verbunden. Im Rahmen der Kabelkonfektionierung wird somit zumindest ein Ende eines elektrischen Kabels bearbeitet, um dieses für die Verbindung mit dem Steckverbinder vorzubereiten.

Die Bearbeitung des oder der Enden des elektrischen Kabels kann dabei unter anderem das Freilegen bzw. Abisolieren von Außenleitern und Innenleitern, das bereichsweise Ablängen des Kabels, das Aufbringen einer Stützhülse für das Montieren des Steckverbinders, das Ablängen eines Außenleiters und ggf. dessen Umstülpen auf eine Stützhülse und/oder die Endmontage des Steckverbinders umfassen.

Besondere Schwierigkeit bereitet hierbei in der Regel das definierte Ablängen des Außenleiters, insbesondere wenn der Außenleiter als Kabelschirmgeflecht ausgebildet ist.

Für das Aufbringen und Montieren eines Steckverbinders ist es in der Regel erforderlich, das Kabelschirmgeflecht zunächst freizulegen, d. h. von dem das Kabelschirmgeflecht umhüllenden Kabelmantel zu befreien, und anschließend einen vorderen Teil des Kabelschirmgeflechts zu entfernen, um im vorderen Bereich des Kabels den Zugang zu einem oder mehreren Innenleitern zu ermöglichen. Die erforderliche Länge, entlang derer der Außenmantel des Kabels im Bereich des zu bearbeitenden Endes des Kabels entfernt werden muss und die erforderliche Länge des zur Kontaktierung verbleibenden Kabelschirmgeflechts sind anwenderspezifisch abhängig vom jeweiligen Steckverbindertyp. Bei der Bereitstellung eines maschinellen Bearbeitungsverfahrens ist es somit zielführend, die entsprechende Vorrichtung zum Bearbeiten eines Endes eines elektrischen Kabels konfigurierbar auszugestalten derart, dass die Solllänge des verbleibenden Kabelschirmgeflechts bzw. des Anschlussstücks des Kabelschirmgeflechts flexibel, einfach und präzise einstellbar ist.

Grundsätzlich kann der Bearbeitungsschritt des teilweisen Ablängens des Kabelschirmgeflechts bzw. Außenleiters manuell vergleichsweise einfach und naturgemäß auch flexibel hinsichtlich der gewünschten Länge des Anschlussstücks des Kabelschirmgeflechts durchgeführt werden. Zur Kostensenkung ist es allerdings vorteilhaft, eine möglichst vollautomatische Konfektionierung und somit eine vollständige maschinelle Bearbeitung für eine Massenproduktion anzustreben.

Ein maschinell automatisierbares Verfahren zur Bearbeitung eines Endes eines elektrischen Kabels ist beispielsweise aus der gattungsgemäßen EP 2 912 736 B1 bekannt. Die EP 2 912 736 B1 offenbart ein Verfahren, bei dem mittels der Kombination aus einem Stempel und einer Matrize die Einzellitzen eines Kabelschirmgeflechts bei der Bearbeitung nach hinten umgeklappt bzw. umgestülpt werden, beispielsweise auf eine Stützhülse zum Vercrimpen mit einem später montierten Steckverbinder, wobei ein überschüssiger Teilbereich bzw. ein Verschnittstück des Kabelschirmgeflechts mittels Scherkräften zwischen dem Stempel und der Matrize automatisch abgetrennt wird. Dieses Verfahren hat sich bewährt und erzielt insbesondere bei der Massenfertigung erhebliche Einsparungen bezüglich Kosten und Zeit.

Das bekannte Verfahren vermag ein Kabelschirmgeflecht allerdings nicht in beliebiger Länge abzuschneiden, insbesondere da das Kabelschirmgeflecht während der Bearbeitung aufgrund der Geometrie der Vorrichtung nach hinten umgeklappt wird. Hierdurch können beliebige Längen nicht ohne Weiteres vorgegeben werden, da die Maße von Stempel und Matrize die Länge des verbleibenden Kabelschirmgeflechts vorgeben. Ferner ist ein Ablängen in Kombination mit einem Umlegen des Kabelschirmgeflechts anwendungsspezifisch nicht immer gewünscht. Das bekannte Verfahren ist damit nicht ausreichend universell für die Verwendung mit unterschiedlichen Steckverbindertypen einsetzbar.

Zum weiteren Stand der Technik wird noch auf die US 2005/0170696 A1 verwiesen, die eine Vorrichtung zum Schneiden eines Kabelschirmgeflechts betrifft. Es wird vorgeschlagen, das Kabelschirmgeflecht in eine Matrize einzuführen und einen Stempel unter das Kabelschirmgeflecht einzuschieben, um das Kabelschirmgeflecht mittels entsprechender Schneiden zwischen der Matrize und dem Stempel zu durchtrennen.

Der vorliegenden Erfindung liegt die Aufgabe zugrunde, eine Vorrichtung zum Bearbeiten eines Endes eines elektrischen Kabels bereitzustellen, das insbesondere geeignet ist, ein freigelegtes Kabelschirmgeflecht des Kabels definiert abzulängen und somit für eine anschließende Konfektionierung vorzubereiten.

Der vorliegenden Erfindung liegt auch die Aufgabe zugrunde, ein Verfahren zum Bearbeiten eines Endes eines elektrischen Kabels bereitzustellen, bei dem ein freigelegtes Kabelschirmgeflecht des Kabels insbesondere für eine nachfolgende Konfektionierung definiert abgelängt werden kann.

Schließlich liegt der Erfindung auch die Aufgabe zugrunde, ein Kabelkonfektionierungssystem bereitzustellen.

Die Aufgabe wird für die Vorrichtung durch Anspruch 1 und für das Verfahren durch Anspruch 8 gelöst. Die Aufgabe wird hinsichtlich des Kabelkonfektionierungssystems durch die Merkmale des Anspruchs 12 gelöst. Die abhängigen Ansprüche betreffen vorteilhafte Ausführungsformen und Varianten der Erfindung.

Die erfindungsgemäße Vorrichtung zum Bearbeiten eines Endes eines elektrischen Kabels umfasst eine Schneidvorrichtung zum Ablängen eines im Bereich des zu bearbeitenden Endes des Kabels freigelegten Kabelschirmgeflechts, um das Kabelschirmgeflecht in ein zu entfernendes Verschnittstück und ein an dem Ende des Kabels verbleibendes Anschlussstück zu zerteilen. Die Schneidvorrichtung weist eine Matrize mit einer Durchgangsbohrung auf, durch die das zu bearbeitende Ende des Kabels koaxial durchführbar ist. Die Schneidvorrichtung weist weiter einen Stempel auf, der an die Matrize koaxial zustellbar ist, um das freigelegte Kabelschirmgeflecht des in die Matrize eingeführten Endes des Kabels mittels Scherkräften zwischen Stempel und Matrize zu zerteilen.

Erfindungsgemäß weist die Matrize eine Anlagefläche für zumindest einen Teilbereich des nach dem Ablängen verbleibenden Anschlussstücks des Kabelschirmgeflechts auf, an der der Teilbereich des Anschlussstücks während des Ablängens anliegt.

Grundsätzlich eignet sich die Erfindung zur Verwendung mit einem beliebigen elektrischen Kabel, das wenigstens einen elektrischen Leiter umfasst. Vorzugsweise umfasst das elektrische Kabel neben einem Außenleiter wenigstens einen Innenleiter, gegebenenfalls auch zwei, drei, vier, fünf, sechs oder noch mehr Innenleiter. Ganz besonders eignet sich die Erfindung zur Verwendung mit elektrischen Kabeln, deren Außenleiter als Kabelschirmgeflecht ausgebildet ist, d. h. als miteinander verflochtene Einzellitzen bzw. Einzeldrähte vorliegt. Aus diesem Grund wird das Kabelschirmgeflecht nachfolgend auch als "Außenleiter" bezeichnet. Dies ist allerdings nicht einschränkend zu verstehen.

Die Erfindung kann sich beispielsweise gut für die Bearbeitung eines Endes eines Koaxialkabels eignen.

In eingelegtem Zustand kann das elektrische Kabel im Rahmen der Erfindung auch als Teil der Vorrichtung angesehen werden.

Dadurch, dass ein Teilbereich des an dem Kabel verbleibenden Kabelschirmgeflechts während dem Ablängen, d. h. während dem Zerteilen des Kabelschirmgeflechts in ein Verschnittstück und ein Anschlussstück, an der Anlagefläche der Matrize anliegt, kann eine besonders einfache Längeneinstellung für die Ablängung des Kabelschirmgeflechts bereitgestellt werden. Im Gegensatz zum Stand der Technik, bei dem sich die verbleibende Länge des Kabelschirmgeflechts bzw. das verbleibende Anschlussstück aus den Maßen der verwendeten Matrize in Kombination mit dem verwendeten Stempel bestimmt, kann vorliegend durch die Positionierung des Kabels in der Matrize bzw. relativ zu der Anlagefläche der Matrize die Solllänge des Anschlussstücks flexibel bestimmt werden.

Der Begriff "Anschlussstück" bezieht sich auf die Funktion des nach dem Ablängen (Abtrennen des Verschnittstücks) noch an dem Kabel verbleibenden Stücks des freigelegten Kabelschirmgeflechts, das im Zuge der Konfektionierung bzw. Bearbeitung des Endes des Kabels an einem Steckverbinder oder einer Hülse eines Steckverbinders etc. angeschlossen werden kann (z. B. zur elektrischen Kontaktierung und/oder zum mechanischen Zugabfang).

Ein weiterer Vorteil der Erfindung ist es, dass eine Ablängung des Kabelschirmgeflechts und ein Umlegen des Anschlussstücks voneinander entkoppelt werden können. Im Gegensatz zum Stand der Technik kann das Kabelschirmgeflecht erfindungsgemäß auch abgelängt werden, ohne dass das Kabelschirmgeflecht anschließend oder gleichzeitig auf eine Stützhülse oder Ähnliches nach hinten umgelegt wird.

Die Erfindung eignet sich dadurch besonders zur Konfektionierung von Steckverbindern, bei denen ein Kabelschirmgeflecht nicht nach hinten über ein Stützelement umgeschlagen werden muss.

Insbesondere ist das zu bearbeitende Ende des Kabels entlang einer Vorschubrichtung koaxial durch die Durchgangsbohrung der Matrize durchführbar. Die Vorschubrichtung kann insbesondere entlang der Längsachse des elektrischen Kabels ausgerichtet sein. Der Stempel zum Zerteilen des Kabelschirmgeflechts wird dann entgegen der Vorschubrichtung an die Matrize koaxial zugestellt.

Bei der Durchgangsbohrung der Matrize handelt es sich vorzugsweise um eine zentrale Durchgangsbohrung.

In einer Weiterbildung der Erfindung kann vorgesehen sein, dass die Anlagefläche der Matrize eine Innenfläche der Durchgangsbohrung der Matrize ist.

Insbesondere eine Innenfläche der Durchgangsbohrung hat sich zur Anlage des Kabelschirmgeflechts während des Ablängens als besonders geeignet herausgestellt. Alternativ kann aber beispielsweise auch eine Stirnfläche im Bereich der Durchgangsbohrung bzw. eine Stirnfläche der Matrize als Anlagefläche vorgesehen sein.

Ganz besonders kann sich auch eine Senkung, beispielsweise eine Plansenkung oder eine Fase der Durchgangsbohrung, zur Anlage des Kabelschirmgeflechts bzw. des Anschlussstücks eignen.

Erfindungsgemäß ist vorgesehen, dass die Matrize und der Stempel ausgebildet sind, dass die Matrize während der koaxialen Zustellung des Stempels in eine Bohrung des Stempels eindringen kann. Alternativ ist erfindungsgemäß vorgesehen, dass die Matrize und der Stempel ausgebildet sind, dass der Stempel während dessen koaxialer Zustellung in die Durchgangsbohrung der Matrize eindringen kann.

Vorzugsweise weist die Matrize an der an dem Stempel zugewandten Vorderseite einen zylindrischen, insbesondere rohrförmigen Abschnitt auf, der die Anlagefläche umfasst. Während der koaxialen Zustellung des Stempels an die Matrize vermag der Stempel dann während des Ablängens den entsprechenden zylindrischen Abschnitt der Matrize zu überfahren bzw. in sich aufzunehmen. Hierzu kann der Stempel eine entsprechend große Bohrung aufweisen, deren Durchmesser größer oder gleich dem Durchmesser des zylindrischen Abschnitts der Matrize ist.

In einer Weiterbildung der Erfindung kann vorgesehen sein, dass die Schneidvorrichtung eine Klemmvorrichtung zum Fixieren des Kabels aufweist, um das Kabel während des Ablängens zumindest axial (bzw. in oder entgegen der Vorschubrichtung) zu fixieren.

Mittels der Klemmvorrichtung kann eine axiale Sicherung des elektrischen Kabels dauerhaft oder auch nur während bestimmter Bearbeitungsschritte, beispielsweise während des Ablängens, möglich sein.

Mittels der Klemmvorrichtung kann das elektrische Kabel gegebenenfalls auch gegen ein Verdrehen gesichert werden. Aufgrund der Klemmvorrichtung kann sich die Erfindung insbesondere auch besonders gut zur Bearbeitung eines Endes eines elektrischen Kabels eignen, das auf einer Kabeltrommel angeordnet ist.

Es kann somit vorgesehen sein, dass die Klemmvorrichtung das Kabel sowohl verdrehsicher als auch axial fixiert, vorzugsweise kraftschlüssig.

Es kann vorgesehen sein, dass die Klemmvorrichtung wenigstens zwei an das Kabel zustellbare Klemmbacken umfasst. Grundsätzlich kann allerdings eine beliebige Klemmvorrichtung vorgesehen sein, insbesondere aber eine elektrisch, pneumatisch und/oder hydraulisch ansteuerbare Klemmvorrichtung, die das elektrische Kabel kraftschlüssig zu fixieren vermag.

Die Klemmvorrichtung kann vorteilhaft verwendet werden, um das zu bearbeitende Ende des elektrischen Kabels zwischen verschiedenen Bearbeitungspositionen bzw. Bearbeitungsstationen innerhalb der erfindungsgemäßen Vorrichtung zu transportieren.

Insbesondere kann vorgesehen sein, dass die Klemmvorrichtung ausgebildet und eingerichtet ist, um das zu bearbeitende Ende des fixierten Kabels zwischen einer Grundposition und wenigstens einer ersten Bearbeitungsposition entlang oder entgegen der Vorschubrichtung axial zu bewegen.

In einer Weiterbildung kann die Klemmvorrichtung beispielsweise ausgebildet und eingerichtet sein, um das zu bearbeitende Ende des Kabels innerhalb der Schneidvorrichtung axial zuzustellen, insbesondere um das zu bearbeitende Ende des Kabels bis zu einer vordefinierten Position in der Durchgangsbohrung der Matrize zuzustellen.

Bei der vordefinierten Position kann es sich beispielsweise um die erste Bearbeitungsposition handeln.

Die Klemmvorrichtung kann in Axialrichtung bzw. in Vorschubrichtung (linear) beweglich ausgebildet sein. Insbesondere kann die Klemmvorrichtung unter Verwendung eines Aktuators entlang der Vorschubrichtung frei positionierbar sein. Die Klemmvorrichtung kann beispielsweise mittels eines Schienensystems, ggf. unter Verwendung eines Seilzugs und/oder pneumatischer und/oder hydraulischer Komponenten, linear beweglich ausgebildet sein. Die Klemmvorrichtung kann für die Positionierung des Kabels auch eine Kulissenführung aufweisen.

Die Grundposition kann beispielsweise einer Position entsprechen, in der das zu bearbeitende Ende des elektrischen Kabels in die Vorrichtung eingebracht wird. Beispielsweise können ein Benutzer der Vorrichtung und/oder eine weitere Einrichtung das zu bearbeitende Ende des elektrischen Kabels bis in die Grundposition in die Klemmvorrichtung einlegen oder einschieben.

In einer Weiterbildung der Erfindung kann vorgesehen sein, dass die Schneidvorrichtung ein radial an das Kabelschirmgeflecht zustellbares zangenartiges Werkzeug aufweist, das ausgebildet und eingerichtet ist, radial umlaufende Eindrückungen in dem Kabelschirmgeflecht zu erzeugen, so dass sich das freigelegte Ende des Kabelschirmgeflechts radial aufweitet.

Unter einem radialen Aufweiten kann insbesondere ein elastisches oder plastisches Umbiegen des Abschnitts des Kabelschirmgeflechts verstanden werden derart, dass sich dieser Abschnitt zumindest teilweise in radialer Richtung, aber nicht zwingend senkrecht, zu der Längsachse des elektrischen Kabels erstreckt.

In vorteilhafter Weise ist die radiale Kraft zur Erzeugung der Eindrückungen kleiner als eine Kraft, die zum wenigstens teilweisen Durchtrennen des Kabelschirmgeflechts erforderlich wäre.

Bei dem zangenartigen Werkzeug kann es sich vorzugsweise um wenigstens ein Formmesser handeln, welches an den Außenumfang des elektrischen Kabels angepasst ist. Vorzugsweise wird ein stumpfes Formmesser verwendet.

Das zangenartige Werkzeug kann die radial umlaufenden Eindrückungen an einer, zwei, drei, vier, fünf oder noch mehr axial zueinander versetzten Positionen entlang des Kabelschirmgeflechts vornehmen. Beispielsweise kann die Klemmvorrichtung verwendet werden, um das zu bearbeitende Ende des Kabels hierzu axial zwischen dem zangenartigen Werkzeug schrittweise weiterzubewegen. Durch das Erzeugen mehrerer Eindrückungen, die entlang des Kabelschirmgeflechts axial versetzt voneinander angeordnet sind, kann insbesondere ein gleichmäßiges Aufweiten und gegebenenfalls auch eine größere Aufweitung erzeugt werden.

Das zangenartige Werkzeug zum Aufweiten des Kabelschirmgeflechts kann beispielsweise an einer ersten Bearbeitungsposition innerhalb der erfindungsgemäßen Vorrichtung angeordnet sein, an die das zu bearbeitende Ende des elektrischen Kabels mittels der Klemmvorrichtung, ausgehend von der Grundposition in einem ersten Bearbeitungsschritt angefahren wird.

Ein radiales Aufweiten des Kabelschirmgeflechts kann insbesondere von Vorteil sein, um das Kabelschirmgeflecht an die Anlagefläche der Matrize anzulegen oder zumindest für die Anlage an der Anlagefläche vorzubereiten. Wenn die Anlagefläche beispielsweise als Senkung/Fase der Durchgangsbohrung der Matrize ausgebildet ist, kann das Kabelschirmgeflecht bis zu einem Winkel aufgeweitet werden, der dem Winkel der Senkung zumindest annähernd entspricht - dies ist allerdings nicht unbedingt erforderlich.

Grundsätzlich können auch anderweitige Maßnahmen vorgesehen sein, um das Kabelschirmgeflecht an die Anlagefläche der Matrize anzulegen bzw. hierfür vorzubereiten.

In einer Weiterbildung der Erfindung kann vorgesehen sein, dass die Schneidvorrichtung eine axial an das zu bearbeitende Ende des Kabels zustellbare Hülse aufweist, die ausgebildet und eingerichtet ist, um vor dem Ablängen zwischen das freigelegte Kabelschirmgeflecht und einen darunterliegenden Mantel des Kabels eingeschoben zu werden.

Grundsätzlich kann auch vorgesehen sein, dass das zu bearbeitende Ende des Kabels an die Hülse zustellbar ist. Die Hülse selbst muss hierfür nicht unbedingt zustellbar ausgebildet sein.

Eine Hülse bzw. ein Stülprohr mit nur geringer Wandstärke kann sich besonders eignen.

Insbesondere bei der Verwendung einer Hülse kann es von Vorteil sein, das Kabelschirmgeflecht vor dem Einschieben der Hülse radial aufzuweiten. Hierzu kann beispielsweise das vorstehend beschriebene zangenartige Werkzeug verwendbar sein. Grundsätzlich ist es aber auch möglich, die Hülse unter das Kabelschirmgeflecht zu schieben, ohne das Kabelschirmgeflecht zuvor aufzuweiten. Ferner sind auch andere Lösungen möglich, um das Kabelschirmgeflecht aufzuweiten; es muss hierfür nicht unbedingt das zangenartige Werkzeug verwendet werden.

Es kann von Vorteil sein, das zangenartige Werkzeug während dem Aufschieben der Hülse geschlossen zu halten, um das zu bearbeitende Ende des Kabels zu fixieren, um ein einfaches Aufschieben zu ermöglichen. Auch eine Fixierung des Kabels mittels der Klemmvorrichtung während dem Aufschieben der Hülse kann von Vorteil sein.

In einer Weiterbildung kann vorgesehen sein, dass die Hülse ausgebildet und eingerichtet ist, um das Kabelschirmgeflecht (bzw. den Teilbereich des verbleibenden Anschlussstücks oder das gesamte verbleibende Anschlussstück) mit der Anlagefläche der Matrize kraftschlüssig in Anlage zu bringen.

Die Hülse kann das Kabelschirmgeflecht hierzu beispielsweise zunächst noch weiter radial aufweiten, bis dieses an der Anlagefläche der Matrize zumindest annähernd flächig anliegt. Beispielsweise kann ein axialer Stoßimpuls ein Aufstellen der Einzellitzen/Einzeldrähte des Außenleiters bzw. des Kabelschirmgeflechts zur Folge haben. Hierzu kann eine stoßartige Bewegung der Hülse oder eine stoßartige Bewegung des zu bearbeitenden Endes des elektrischen Kabels mittels der Klemmvorrichtung ausgeführt werden.

Es kann auch vorgesehen sein, die Hülse entgegen der Vorschubrichtung bis zum Anschlag an der Matrize bzw. bis das Kabelschirmgeflecht zwischen der Hülse und der Anlagefläche der Matrize eingeklemmt ist, an die Matrize zuzustellen. Insbesondere auf diese Weise kann eine geeignete kraftschlüssige Anlage des Kabelschirmgeflechts an der Anlagefläche der Matrize ermöglicht werden. Insbesondere wenn das Kabelschirmgeflecht mittels der Hülse kraftschlüssig an der Anlagefläche der Matrize angelegt wird, kann eine Ablängung mittels koaxialer Zustellung des Stempels besonders sauber/exakt erfolgen.

Die Hülse kann beispielsweise eine Stirnfläche aufweisen, die einem Negativ eines vorderen Abschnitts der Durchgangsbohrung der Matrize entspricht, insbesondere um zumindest teilweise in die Durchgangsbohrung der Matrize einzudringen und das Kabelschirmgeflecht beispielsweise an einer Senkung/Fase der Durchgangsbohrung zu fixieren.

Nach der Bearbeitung eines ersten Endes des elektrischen Kabels mittels der erfindungsgemäßen Vorrichtung kann gegebenenfalls auch ein zweites Ende des elektrischen Kabels mittels der erfindungsgemäßen Vorrichtung bearbeitet werden.

Die Erfindung betrifft auch ein Verfahren zum maschinellen Bearbeiten eines Endes eines elektrischen Kabels. Bei dem erfindungsgemäßen Verfahren ist vorgesehen, dass ein im Bereich des zu bearbeitenden Endes des Kabels freigelegtes Kabelschirmgeflecht mittels einer Schneidvorrichtung abgelängt und hierdurch in ein zu entfernendes Verschnittstück und ein an dem Ende des Kabels verbleibendes Anschlussstück zerteilt wird. Dabei wird das zu bearbeitende Ende des Kabels zunächst koaxial durch eine Durchgangsbohrung einer Matrize durchgeführt und anschließend ein Stempel an die Matrize koaxial zugestellt, der das freigelegte Kabelschirmgeflecht des durch die Matrize durchgeführten Endes des Kabels mittels Scherkräften zerteilt. Bei dem erfindungsgemäßen Verfahren ist vorgesehen, dass zumindest ein Teilbereich des nach dem Ablängen verbleibenden Anschlussstücks des Kabelschirmgeflechts während des Ablängens an einer Anlagefläche der Matrize angelegt wird.

Die Zustellung des Stempels an die Matrize erfolgt entgegen der Einschubrichtung des Kabels in die Matrize.

Das erfindungsgemäße Verfahren bzw. die erfindungsgemäße Vorrichtung können sich besonders zur Bearbeitung von Kabeln zur Verwendung innerhalb von Fahrzeugen, insbesondere Kraftfahrzeugen, eignen. Mögliche Einsatzgebiete sind beispielsweise Elektrofahrzeuge, bei denen elektrische Kabel mit gro-ßem Querschnitt und guter Abschirmung erforderlich sind. Die erfindungsgemäße Vorrichtung bzw. das erfindungsgemäße Verfahren können sich allerdings auch besonders gut für die Bearbeitung von elektrischen Kabeln für die Hochfrequenztechnik eignen. Grundsätzlich eignet sich die Erfindung zur Bearbeitung beliebiger Kabel für beliebige Einsatzgebiete innerhalb der gesamten Elektrotechnik.

Während sich die Länge des an dem Kabel verbleibenden Anschlussstücks des Kabelschirmgeflechts bei den Schneidvorrichtungen des Stands der Technik beispielsweise anhand des Durchmessers der Matrize ergibt, kann nunmehr eine variable Einstellung der Schnittlänge ermöglicht werden. Beispielsweise kann lediglich anhand der Positionierung des Kabels innerhalb der Vorrichtung eine beliebige Schirmlänge vorgegeben werden.

In einer Weiterbildung kann vorgesehen sein, dass eine Solllänge des nach dem Ablängen verbleibenden Anschlussstücks des Kabelschirmgeflechts durch eine axiale Positionierung des Kabels an einer vordefinierten Position in der Durchgangsbohrung bestimmt wird.

Grundsätzlich ist die Länge des nach dem Ablängen verbleibenden Kabelschirmgeflechts umso größer, je weiter das elektrische Kabel durch die Durchgangsbohrung der Matrize geschoben wird.

In einer Weiterbildung der Erfindung kann vorgesehen sein, dass das freigelegte Kabelschirmgeflecht entlang des Kabels in mehreren Schritten abgelängt wird.

Eine Ablängung in mehreren Schritten kann insbesondere von Vorteil sein, wenn die Länge des zu bearbeitenden Endes des Kabels oder die Solllänge des nach dem Ablängen verbleibenden Kabelschirmgeflechts vergleichsweise groß ist. Beispielsweise kann eine Ablängung in mehreren Schritten von Vorteil sein, wenn die abzuschneidende Länge des Kabelschirmgeflechts bzw. die Länge des Verschnittstücks größer ist als 2 cm, 3 cm, 4 cm, 5 cm, 10 cm oder 15 cm.

Bei einem besonders langen Kabelschirmgeflecht bzw. der Anforderung der Abtrennung eines besonders langen Stücks des Kabelschirmgeflechts kann vorgesehen sein, dass zunächst ein vorderer Teil des Kabelschirmgeflechts mittels des zangenartigen Werkzeugs radial aufgeweitet wird, wonach optional die Hülse zugestellt und der vordere Abschnitt des Kabelschirmgeflechts mittels dem Stempel abgelängt wird. Anschließend können Stempel und ggf. die Hülse von dem zu bearbeitenden Ende des Kabels wieder entfernt und das Kabel weiter in Vorschubrichtung zugestellt werden, um einen nächsten Abschnitt abzulängen, wozu zunächst wieder das zangenartige Werkzeug zur radialen Aufweitung eingesetzt wird.

Für das erfindungsgemäße Verfahren ist vorgesehen, dass ein vorderer Abschnitt der Matrize während dem Ablängen des Kabelschirmgeflechts in eine Bohrung des Stempels eindringt. Alternativ ist für das erfindungsgemäße Verfahren vorgesehen, dass die Matrize und der Stempel ausgebildet sind, dass der Stempel während dessen koaxialer Zustellung in die Durchgangsbohrung der Matrize eindringen kann.

Es kann außerdem vorgesehen sein, dass das Kabelschirmgeflecht vor dem Ablängen, beispielsweise durch ein zangenartiges Werkzeug, radial aufgeweitet wird, insbesondere indem das zangenartige Werkzeug radial umlaufende Eindrückungen in dem Kabelschirmgeflecht erzeugt.

In einer Weiterbildung der Erfindung kann außerdem vorgesehen sein, dass eine Hülse bzw. ein Stülprohr zwischen das freigelegte Kabelschirmgeflecht und einen darunterliegenden Mantel des Kabels eingeschoben wird, die das Kabelschirmgeflecht vorzugsweise vor dem Ablängen radial aufweitet und/oder die das Kabelschirmgeflecht an der Anlagefläche der Matrize kraftschlüssig anlegt.

Hierzu kann die Hülse an das Kabelschirmgeflecht und/oder das Kabelschirmgeflecht an die Hülse zugestellt werden.

Die Verwendung einer Hülse kann in vorteilhafter Weise auch zur Zentrierung des zu bearbeitenden Endes eines elektrischen Kabels und zur verbesserten Führung dienen.

Die Erfindung betrifft schließlich auch ein Kabelkonfektionierungssystem, umfassend eine Vorrichtung zum Bearbeiten des wenigstens einen Endes des Kabels gemäß den vorstehenden Ausführungen, sowie
- eine Einrichtung zum teilweisen Freilegen eines Kabelschirmgeflechts eines elektrischen Kabels im Bereich wenigstens eines zu bearbeitenden Endes des Kabels; und/oder
- eine Einrichtung zur Montage eines Steckverbinders an das wenigstens eine zu bearbeitende Ende des Kabels; und/oder
- eine Einrichtung zum Ablängen des Kabels.

Merkmale, die bereits im Zusammenhang mit der erfindungsgemäßen Vorrichtung beschrieben wurden, sind selbstverständlich auch für das erfindungsgemäße Verfahren bzw. das Kabelkonfektionierungssystem vorteilhaft umsetzbar - und umgekehrt. Ferner können Vorteile, die bereits im Zusammenhang mit der erfindungsgemäßen Vorrichtung genannt wurden, auch auf das erfindungsgemäße Verfahren bzw. auf das Kabelkonfektionierungssystem bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

Nachfolgend werden Ausführungsbeispiele der Erfindung anhand der Zeichnung näher beschrieben. Die Figuren zeigen jeweils bevorzugte Ausführungsbeispiele, in denen einzelne Merkmale der vorliegenden Erfindung in Kombination miteinander dargestellt sind.

In den Figuren sind funktionsgleiche Elemente mit denselben Bezugszeichen versehen. Es zeigen schematisch:
- Fig. 1: die erfindungsgemäße Vorrichtung vor dem Einlegen des zu bearbeitenden Endes des elektrischen Kabels in einer Schnittdarstellung;
- Fig. 2: einen Ausschnitt der erfindungsgemäßen Vorrichtung mit einem in eine Grundposition eingelegten elektrischen Kabel in einer Schnittdarstellung;
- Fig. 3: einen Ausschnitt der erfindungsgemäßen Vorrichtung mit dem in der Grundposition mittels der Klemmvorrichtung fixierten zu bearbeitenden Endes des elektrischen Kabels in einer Schnittdarstellung;
- Fig. 4: einen Ausschnitt der erfindungsgemäßen Vorrichtung mit dem in eine erste Bearbeitungsposition verbrachten zu bearbeitenden Endes des elektrischen Kabels in einer Schnittdarstellung;
- Fig. 5: einen Ausschnitt der erfindungsgemäßen Vorrichtung während eines Bearbeitungsschritts zum radialen Aufweiten des Kabelschirmgeflechts in einer Schnittdarstellung;
- Fig. 6: einen Ausschnitt der erfindungsgemäßen Vorrichtung während eines Bearbeitungszustands beim Einschieben einer zustellbaren Hülse in einer Schnittdarstellung;
- Fig. 7: einen Ausschnitt der erfindungsgemäßen Vorrichtung mit zugestellter Hülse und an die Anlagefläche der Matrize angelegtem Kabelschirmgeflecht in einer Schnittdarstellung;
- Fig. 8: einen Ausschnitt der erfindungsgemäßen Vorrichtung während dem Beginn der Zustellung des Stempels an die Matrize in einer Schnittdarstellung;
- Fig. 9: einen Ausschnitt der erfindungsgemäßen Vorrichtung während der Zustellung des Stempels an die Matrize kurz vor dem Ablängen des Kabelschirmgeflechts in einer Schnittdarstellung;
- Fig. 10: einen Ausschnitt der erfindungsgemäßen Vorrichtung nach dem Ablängen des Kabelschirmgeflechts durch den Stempel in einer Schnittdarstellung;
- Fig. 11: ein beispielhaftes Ende eines elektrischen Kabels nach der Bearbeitung durch die Vorrichtung und vor der Montage eines Steckverbinders in einer Schnittdarstellung; und
- Fig. 12: ein erfindungsgemäßes Kabelkonfektionierungssystem.

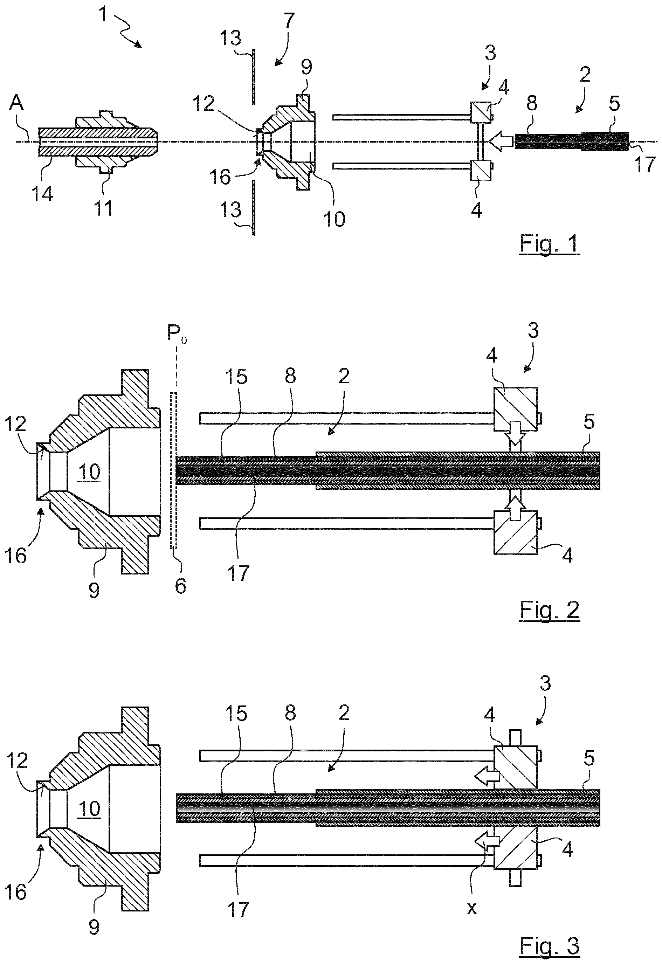

Die Figuren 1 bis 10 zeigen die erfindungsgemäße Vorrichtung 1 zum Bearbeiten eines Endes 2 eines elektrischen Kabels während der Durchführung eines maschinellen Bearbeitungsverfahrens zu verschiedenen Zeitpunkten in einer Schnittdarstellung.

In Figur 1 ist ein Zustand der Vorrichtung 1 gezeigt, bei dem das zu bearbeitende Ende 2 des elektrischen Kabels noch nicht in die Vorrichtung 1 eingelegt ist. Grundsätzlich kann das zu bearbeitende Ende 2 des elektrischen Kabels manuell von einem Benutzer (nicht dargestellt) oder maschinell von einer weiteren Einrichtung (nicht dargestellt) der Vorrichtung 1 zugeführt werden.

Die Vorrichtung 1 ist lediglich schematisch hinsichtlich deren funktioneller Komponenten dargestellt und nur beispielhaft zu verstehen.

Die erfindungsgemäße Vorrichtung 1 umfasst eine Klemmvorrichtung 3 zum Fixieren des Endes 2 des Kabels. Die Klemmvorrichtung 3 ist ausgebildet, um das Ende 2 des elektrischen Kabels während der nachfolgend noch beschriebenen Bearbeitung axial und gegebenenfalls auch verdrehsicher zu fixieren. Die Klemmvorrichtung 3 weist hierfür beispielsweise, wie im Ausführungsbeispiel gezeigt, wenigstens zwei an das Ende 2 des Kabels zustellbare Klemmbacken 4 auf. Die Klemmbacken 4 können an den Außenmantel 5 des elektrischen Kabels zustellbar sein und das Ende 2 des Kabels kraftschlüssig fixieren, wie in Figur 2 durch die beiden Pfeile angedeutet.

In Figur 2, die einen Ausschnitt der Vorrichtung 1 zeigt, befindet sich das zu bearbeitende Ende 2 des elektrischen Kabels in einer Grundposition Po, ausgehend von der die Bearbeitung des Endes 2 des elektrischen Kabels initiiert werden kann. Zur Unterstützung eines Benutzers beim Einlegen des Endes 2 des elektrischen Kabels in die Vorrichtung 1 kann beispielsweise ein verstellbarer Endanschlag 6 vorgesehen sein, der in Figur 2 gestrichelt angedeutet ist. Der Endanschlag 6 kann vor der Bearbeitung des Endes 2 des elektrischen Kabels manuell oder automatisch wieder entfernt werden, um den Verschiebeweg für das Ende 2 des elektrischen Kabels weiter in die Vorrichtung 1 freizugeben.

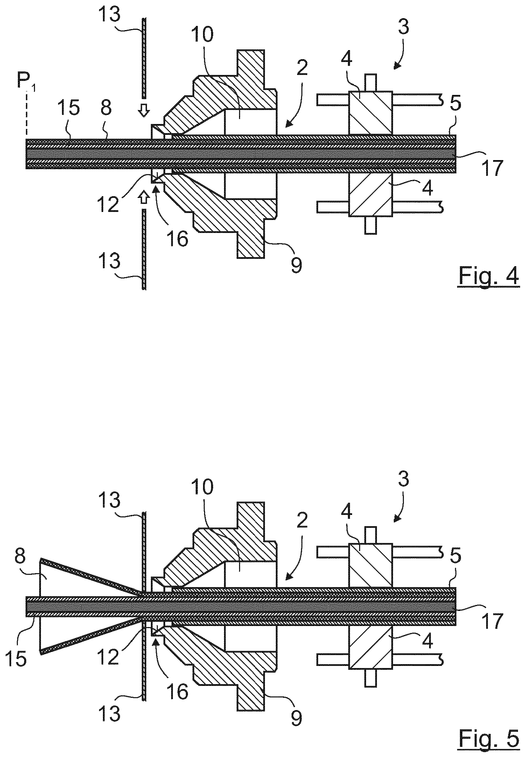

In vorteilhafter Weise kann vorgesehen sein, dass die Klemmvorrichtung 3 ausgebildet und eingerichtet ist, um das zu bearbeitende Ende 2 des fixierten Kabels zwischen der Grundposition P₀ und wenigstens einer ersten Bearbeitungsposition P₁ (vgl. Figur 4) entlang einer Vorschubrichtung x (vgl. Figur 3) axial entlang der in Figur 1 dargestellten Mittelachse A zu bewegen. Die Klemmvorrichtung 3 vermag somit das zu bearbeitende Ende 2 des Kabels im Verlauf des mittels der Vorrichtung 1 ausgeführten maschinellen Bearbeitungsverfahrens zwischen verschiedenen Bearbeitungsstationen bzw. Bearbeitungspositionen zu bewegen.

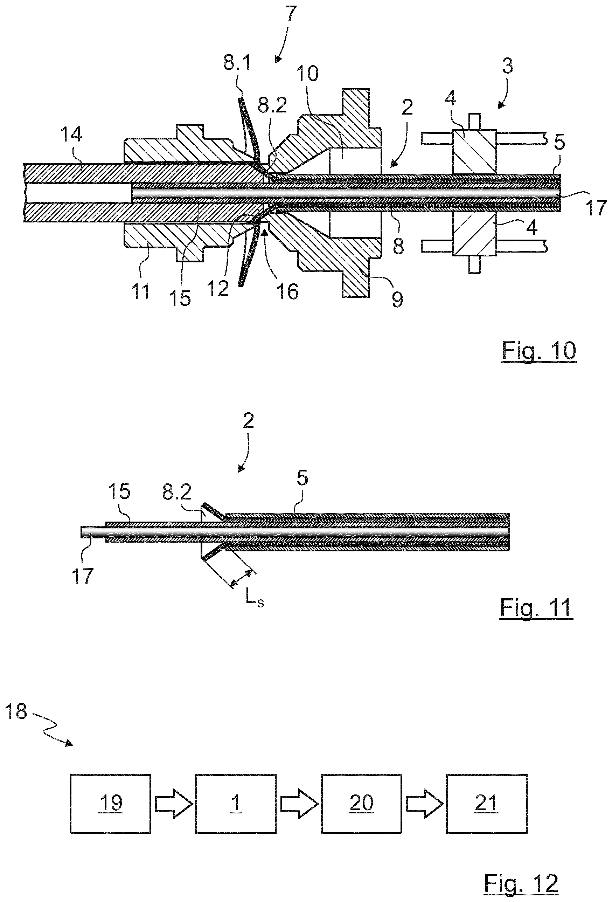

Die Vorrichtung 1 umfasst außerdem eine Schneidvorrichtung 7 zum Ablängen eines im Bereich des zu bearbeitenden Endes 2 des Kabels freigelegten Kabelschirmgeflechts 8. Die Schneidvorrichtung 7 weist hierzu eine Matrize 9 mit einer Durchgangsbohrung 10 auf, durch die das zu bearbeitende Ende 2 des Kabels koaxial durchführbar ist, sowie einen Stempel 11, der an die Matrize 9 (entgegen der Vorschubrichtung x) koaxial zustellbar ist, um das freigelegte Kabelschirmgeflecht 8 des in die Matrize 9 eingeführten Endes 2 des Kabels mittels Scherkräften zwischen Stempel 11 und Matrize 9 abzutrennen. Dabei ist vorgesehen, dass die Matrize 9 eine Anlagefläche 12 für zumindest einen Teilbereich des nach dem Ablängen verbleibenden Kabelschirmgeflechts 8.2 ("Anschlussstück 8.2", vgl. Figuren 10 und 11) aufweist, an der der Teilbereich des Kabelschirmgeflechts 8 während des Ablängens anliegt.

Bei der Anlagefläche 12 der Matrize 9 kann es sich vorzugsweise um eine Innenfläche der Durchgangsbohrung 10 der Matrize 8 handeln. Im Ausführungsbeispiel handelt es sich bei der Anlagefläche 12 um eine Senkung der Durchgangsbohrung 10. Alternativ kann auch vorgesehen sein, dass die Anlagefläche 12 beispielsweise eine Stirnfläche der Matrize 9 ist.

Im Zuge einer möglichst vollständigen maschinellen Bearbeitung des Endes 2 des elektrischen Kabels können weitere Bearbeitungsschritte und Komponenten der Vorrichtung 1 vorgesehen sein, die für die Erfindung allerdings nicht einschränkend, sondern nur optional als vorteilhafte Weiterbildungen zu verstehen sind. Insbesondere ist auch die Verwendung der Klemmvorrichtung 3 nur optional.

In dem Verfahrensschritt der Figur 3 wird das zu bearbeitende Ende 2 des elektrischen Kabels mittels der Klemmvorrichtung 3 in Vorschubrichtung x in eine erste Bearbeitungsposition P₁ verbracht, in der sich das Kabelschirmgeflecht 8 des Endes 2 des Kabels zwischen zwei zangenartigen Werkzeugen 13 befindet, wie in Figur 4 dargestellt. In dieser ersten Bearbeitungsposition P₁ wird das zu bearbeitende Ende 2 des elektrischen Kabels mittels der Klemmvorrichtung 3 anschließend zunächst axial fixiert.

Die zangenartigen Werkzeuge 13 sind radial an den freigelegten Außenleiter bzw. das Kabelschirmgeflecht 8 des Endes 2 des Kabels zustellbar und ausgebildet sowie eingerichtet, radial umlaufende Eindrückungen in dem Kabelschirmgeflecht 8 zu erzeugen derart, dass sich das freigelegte Ende des Kabelschirmgeflechts 8 ausgehend von den Eindrückungen radial aufweitet, wie in Figur 5 dargestellt.

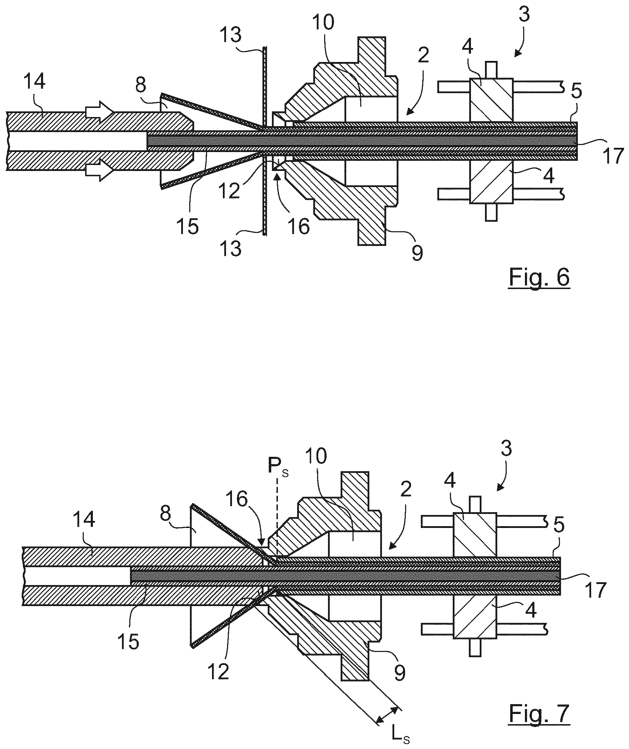

Nach dem ersten radialen Aufweiten kann vorgesehen sein, dass das zangenartige Werkzeug 13 zunächst geschlossen bleibt, während eine Hülse 14 zwischen das Kabelschirmgeflecht 8 des Kabels und einen darunter liegenden Mantel 15 des Kabels eingeschoben wird, wie in Figur 6 dargestellt. Hierfür kann die Hülse 14 axial entgegen der Vorschubrichtung x an das zu bearbeitende Ende 2 des Kabels zustellbar ausgebildet sein. Es kann allerdings auch vorgesehen sein, dass die Hülse 14 unbeweglich montiert ist, wobei die Hülse 14 dann unter das Kabelschirmgeflecht 8 des Kabels eingeschoben wird, indem das zu bearbeitende Ende 2 des elektrischen Kabels mittels der Klemmvorrichtung 3 axial an die Hülse 14 zugestellt wird. Auch eine kombinierte Zustellung von Kabelschirmgeflecht 8 und Hülse 14 kann vorgesehen sein.

Damit die Hülse 14 besonders einfach unter den Außenleiter bzw. das Kabelschirmgeflecht 8 einschiebbar ist, kann das in den Figuren 4 und 5 dargestellte vorhergehende Aufweiten des Kabelschirmgeflechts 8 vorteilhaft sein. Ein vorhergehendes Aufweiten des Kabelschirmgeflechts 8 ist im Rahmen der Erfindung jedoch nicht unbedingt erforderlich, insbesondere wenn die Hülse 14 bzw. ein Stülprohr mit nur geringer Wandstärke verwendet wird.

Es kann also vorgesehen sein, dass die Hülse 14 entgegen der Vorschubrichtung x an die Matrize 9 zugestellt wird, bis das Kabelschirmgeflecht 8 an die Anlagefläche 12 der Matrize 9 anliegt, vorzugsweise kraftschlüssig durch ein Einklemmen des Kabelschirmgeflechts 8 zwischen Hülse 14 und Anlagefläche 12 der Matrize 9, wie in Figur 7 dargestellt. Zuvor kann das zangenartige Werkzeug 13 wieder geöffnet werden, um den Verschiebeweg entsprechend freizugeben, wobei es allerdings von Vorteil sein kann, das zangenartige Werkzeug 13 und/oder die Klemmvorrichtung 3 zumindest während des "Einfädelns" der Hülse 14 noch geschlossen zu halten.

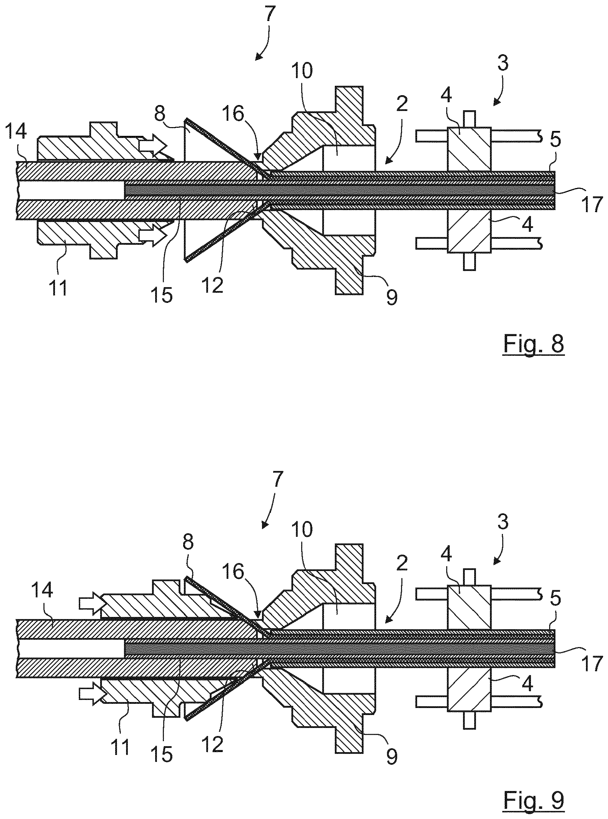

Schließlich kann der Stempel 11 entgegen der Vorschubrichtung x an die Matrize 9 zugestellt werden, wie in den Figuren 8 bis 10 dargestellt. Dabei wird der Stempel 9 zunächst unter das aufgestellt Kabelschirmgeflecht 8 geschoben, bis er die Position im Bereich der Anlagefläche 12, an der das Kabelschirmgeflecht 8 anliegt, erreicht, wie in Figur 9 dargestellt. Durch eine anschließend noch weitere Zustellung des Stempels 11 erfolgt ein Abschneiden des Kabelschirmgeflechts 8 mittels Scherkräften zwischen Stempel 11 und Matrize 9, während der Stempel 11 einen vorderen, zylindrischen Abschnitt 16 der Matrize 9 überfährt. Alternativ kann auch vorgesehen sein, dass der Stempel 11 an die Matrize 9 stirnseitig anschlägt oder in die Matrize 9 eindringt.

Erfindungsgemäß ist es durch die Verwendung der Anlagefläche 12 der Matrize 9 nunmehr möglich, die Solllänge Ls (vgl. Figur 7 und Figur 11) des in den Figuren 10 und 11 dargestellten, nach dem Ablängen verbleibenden Anschlussstücks 8.2 des Kabelschirmgeflechts 8 technisch einfach durch die axiale Positionierung des Endes 2 des Kabels in der Vorrichtung 1 vorzugeben. Beispielsweise kann die Position Ps, von der an ausgehend das Kabelschirmgeflecht 8 vom Außenleiter 5 freigelegt ist, beliebig weit in der Matrize 9 oder aber auch hinsichtlich der Vorschubrichtung x vor der Matrize 9 positioniert sein, wodurch sich die Solllänge Ls des Anschlussstücks 8.2 leicht einstellen lässt. Das durch das Ablängen bzw. Zerteilen entstehende Verschnittstück 8.1 des Kabelschirmgeflechts 8 kann anschließend entfernt werden. Die Zusammenhänge sind in Figur 7 dargestellt.

Gegebenenfalls kann vorgesehen sein, das freigelegte Kabelschirmgeflecht 8 entlang des Kabels in mehreren Schritten abzulängen, insbesondere wenn das freigelegte Kabelschirmgeflecht 8, das verbleibende Anschlussstück 8.2 oder das zu bearbeitende Endes 2 des Kabels vergleichsweise lang ist. Beispielsweise kann eine Ablängung dann in Schritten von bis zu 1 cm, 2 cm, 3 cm, 4 cm, 5 cm oder in noch größeren Schnitten erfolgen, wobei zunächst ein vorderer Abschnitt des Kabelschirmgeflechts 8 radial aufgeweitet wird, wie in den Figuren 4 und 5 dargestellt, anschließend die Hülse 14 aufgeschoben wird, wie in den Figuren 6 und 7 dargestellt, und anschließend der vordere Abschnitt des Kabelschirmgeflechts 8 mittels des Stempels 11, wie in den Figuren 8 bis 10 dargestellt, abgelängt wird. Anschließend können Stempel 11 und Hülse 14 wieder entlang der Vorschubrichtung x entfernt werden, wonach das Ende 2 des Kabels beispielsweise mittels der Klemmvorrichtung 3 weiter entlang der Vorschubrichtung x zugestellt wird, um den nächsten Abschnitt des Kabelschirmgeflechts 8 auf analoge Weise abzulängen. Hierdurch können beliebige Solllängen Ls des Anschlussstücks 8.2 - unabhängig von der Länge des Endes 2 des Kabels - erzeugt werden.

Figur 11 zeigt beispielhaft das zu bearbeitende Ende 2 des elektrischen Kabels nach der erfindungsgemäßen Bearbeitung. Zur Verdeutlichung ist ein vorderer Abschnitt eines Innenleiters 17 des dargestellten Kabels abisoliert. Das dargestellte Ende 2 des elektrischen Kabels ist damit zur Konfektionierung mit einem Steckverbinder (nicht dargestellt) vorbereitet, wonach der Innenleiter 17 und der abgelängte Außenleiter bzw. das Anschlussstück 8.2 von dem gewünschten Steckverbinder jeweils separat, insbesondere elektrisch isoliert, kontaktierbar sind.

Grundsätzlich können erfindungsgemäß beliebige elektrische Kabel bearbeitet werden. Bei einem elektrischen Kabel, dessen Ende 2 erfindungsgemäß bearbeitet werden kann, kann es sich beispielsweise auch um ein mehradriges Kabel oder um ein in den Figuren 1 bis 11 dargestelltes Koaxialkabel handeln. Grundsätzlich ist die Erfindung nicht auf die Verwendung mit einer bestimmten Art des elektrischen Kabels beschränkt zu verstehen.

Die Erfindung betrifft auch ein Kabelkonfektionierungssystem 18, umfassend zumindest eine Vorrichtung 1 zum Bearbeiten des wenigstens einen Endes 2 des elektrischen Kabels gemäß den vorstehenden Ausführungen. Ein erfindungsgemäßes Kabelkonfektionierungssystem 18 ist als Blockdiagramm in Figur 12 beispielhaft dargestellt.

Das Kabelkonfektionierungssystem 18 kann eine Einrichtung 19 zum teilweisen Freilegen des Kabelschirmgeflechts 8 umfassen, um das zu bearbeitenden Ende 2 des elektrischen Kabels gemäß der in Figur 1 dargestellten Art für die Vorrichtung 1 bereitzustellen.

Das Kabelkonfektionierungssystem 18 kann ferner eine Einrichtung 20 zur Montage eines Steckverbinders an das wenigstens eine zu bearbeitende Ende 2 des elektrischen Kabels aufweisen. Hierzu kann beispielsweise ein in Figur 11 dargestelltes Koaxialkabel mit einem Steckverbinder verbunden werden, wonach zunächst noch der Innenleiter 17 von dessen umhüllenden Dielektrikum 15 befreit wird. Anschließend kann der Steckverbinder einerseits mit dem wenigstens einen Innenleiter 17 und andererseits mit dem nach dem Ablängen verbleibenden Außenleiter bzw. Kabelschirmgeflecht 8.2 verbunden, insbesondere vercrimpt, werden. Eine Verbindung des Anschlussstücks 8.2 des Endes 2 des elektrischen Kabels mit einem Außenleiter des Steckverbinders kann insbesondere durch ein Vercrimpen des Anschlussstücks 8.2 zwischen einer an dem Ende 2 des Kabels fixierten Stützhülse und einer weiteren Hülse des Steckverbinders erfolgen.

Schließlich kann das Kabelkonfektionierungssystem 18 noch eine Einrichtung 21 zum Ablängen des elektrischen Kabels aufweisen.

## Patentansprüche

1. Vorrichtung (1) zum Bearbeiten eines Endes (2) eines elektrischen Kabels, umfassend eine Schneidvorrichtung (7) zum Ablängen eines im Bereich des zu bearbeitenden Endes (2) des Kabels freigelegten Kabelschirmgeflechts (8), um das Kabelschirmgeflecht (8) in ein zu entfernendes Verschnittstück (8.1) und ein an dem Ende (2) des Kabels verbleibendes Anschlussstück (8.2) zu zerteilen, wobei die Schneidvorrichtung (7) eine Matrize (9) mit einer Durchgangsbohrung (10) aufweist, durch die das zu bearbeitende Ende (2) des Kabels koaxial durchführbar ist, und wobei die Schneidvorrichtung (7) weiter einen Stempel (11) aufweist, der an die Matrize (9) koaxial zustellbar ist, um das freigelegte Kabelschirmgeflecht (8) des in die Matrize (9) eingeführten Endes (2) des Kabels mittels Scherkräften zwischen Stempel (11) und Matrize (9) zu zerteilen,
**dadurch gekennzeichnet, dass**
die Matrize (9) eine Anlagefläche (12) für zumindest einen Teilbereich des nach dem Ablängen verbleibenden Anschlussstücks (8.1) des Kabelschirmgeflechts (8) aufweist, an der der Teilbereich des Anschlussstücks (8.1) während des Ablängens anliegt, wobei die Matrize (9) und der Stempel (11) ausgebildet sind, dass die Matrize (9) während der koaxialen Zustellung des Stempels (11) in eine Bohrung des Stempels (11) eindringen kann oder dass der Stempel (11) während dessen koaxialer Zustellung in die Durchgangsbohrung (10) der Matrize (9) eindringen kann.

2. Vorrichtung (1) nach Anspruch 1,
**dadurch gekennzeichnet, dass**
die Anlagefläche (12) der Matrize (9) eine Innenfläche der Durchgangsbohrung (10) der Matrize (9) ist.

3. Vorrichtung (1) nach Anspruch 1 oder 2,
**dadurch gekennzeichnet, dass**
die Schneidvorrichtung (7) eine Klemmvorrichtung (3) zum Fixieren des Kabels aufweist, um das Kabel während des Ablängens zumindest axial zu fixieren.

4. Vorrichtung (1) nach Anspruch 3,
**dadurch gekennzeichnet, dass**
die Klemmvorrichtung (3) ausgebildet und eingerichtet ist, um das zu bearbeitende Ende (2) des Kabels innerhalb der Schneidvorrichtung (7) axial zuzustellen, insbesondere um das zu bearbeitende Ende (2) des Kabels bis zu einer vordefinierten Position (Ps) in der Durchgangsbohrung (10) der Matrize (9) zuzustellen.

5. Vorrichtung (1) nach einem der Ansprüche 1 bis 4,
**dadurch gekennzeichnet, dass**
die Schneidvorrichtung (7) ein radial an das Kabelschirmgeflecht (8) zustellbares zangenartiges Werkzeug (13) aufweist, das ausgebildet und eingerichtet ist, radial umlaufende Eindrückungen in dem Kabelschirmgeflecht (8) zu erzeugen, so dass sich das freigelegte Ende des Kabelschirmgeflechts (8) radial aufweitet.

6. Vorrichtung (1) nach einem der Ansprüche 1 bis 5,
**dadurch gekennzeichnet, dass**
die Schneidvorrichtung (7) eine axial an das zu bearbeitende Ende (2) des Kabels zustellbare Hülse (14) aufweist, die ausgebildet und eingerichtet ist, um vor dem Ablängen zwischen das freigelegte Kabelschirmgeflecht (8) und einen darunterliegenden Mantel (15) des Kabels eingeschoben zu werden.

7. Vorrichtung (1) nach Anspruch 6,
**dadurch gekennzeichnet, dass**
die Hülse (14) ausgebildet und eingerichtet ist, um das Kabelschirmgeflecht (8) mit der Anlagefläche (12) der Matrize (9) kraftschlüssig in Anlage zu bringen.

8. Verfahren zum maschinellen Bearbeiten eines Endes (2) eines elektrischen Kabels, wonach ein im Bereich des zu bearbeitenden Endes (2) des Kabels freigelegtes Kabelschirmgeflecht (8) mittels einer Schneidvorrichtung (7) abgelängt und hierdurch in ein zu entfernendes Verschnittstück (8.1) und ein an dem Ende (2) des Kabels verbleibendes Anschlussstück (8.2) zerteilt wird, wobei das zu bearbeitende Ende (2) des Kabels zunächst koaxial durch eine Durchgangsbohrung (10) einer Matrize (9) durchgeführt und anschließend ein Stempel (11) an die Matrize (9) koaxial zugestellt wird, der das freigelegte Kabelschirmgeflecht (8) des durch die Matrize (9) durchgeführten Endes (2) des Kabels mittels Scherkräften zerteilt,
**dadurch gekennzeichnet, dass**
zumindest ein Teilbereich des nach dem Ablängen verbleibenden Anschlussstücks (8.2) des Kabelschirmgeflechts (8) während des Ablängens an einer Anlagefläche (12) der Matrize (9) angelegt wird, wobei
- ein vorderer Abschnitt (16) der Matrize (9) während dem Ablängen des Kabelschirmgeflechts (8) in eine Bohrung des Stempels (11) eindringt; oder
- der Stempel (11) während dessen koaxialer Zustellung in die Durchgangsbohrung (10) der Matrize (9) eindringt.

9. Verfahren nach Anspruch 8,
**dadurch gekennzeichnet, dass**
eine Solllänge (Ls) des nach dem Ablängen verbleibenden Anschlussstücks (8.2) des Kabelschirmgeflechts (8) durch eine axiale Positionierung des Kabels an einer vordefinierten Position (Ps) in der Durchgangsbohrung (10) bestimmt wird.

10. Verfahren nach Anspruch 8 oder 9,
**dadurch gekennzeichnet, dass**
das freigelegte Kabelschirmgeflecht (8) entlang des Kabels in mehreren Schritten abgelängt wird.

11. Verfahren nach einem der Ansprüche 8 bis 10,
**dadurch gekennzeichnet, dass**
eine Hülse (14) zwischen das freigelegte Kabelschirmgeflecht (8) und einen darunterliegenden Mantel (15) des Kabels eingeschoben wird, die das Kabelschirmgeflecht (8) vorzugsweise vor dem Ablängen radial aufweitet und/oder die das Kabelschirmgeflecht (8) an der Anlagefläche (12) der Matrize (9) kraftschlüssig anlegt.

12. Kabelkonfektionierungssystem (18), umfassend eine Vorrichtung (1) zum Bearbeiten wenigstens eines Endes (2) eines Kabels nach einem der Ansprüche 1 bis 7, sowie
- eine Einrichtung (19) zum teilweisen Freilegen eines Kabelschirmgeflechts (8) eines elektrischen Kabels im Bereich wenigstens eines zu bearbeitenden Endes (2) des Kabels; und/oder
- eine Einrichtung (20) zur Montage eines Steckverbinders an das wenigstens eine zu bearbeitende Ende (2) des Kabels; und/oder
- eine Einrichtung (21) zum Ablängen des Kabels.

## Claims

1. A device (1) for processing an end (2) of an electrical cable, comprising a cutting device (7) for cutting to length a cable shielding braid (8) exposed in the region of the end (2) of the cable to be processed, in order to divide the cable shielding braid (8) into a cutting piece (8.1) to be removed and a connecting piece (8.2) remaining at the end (2) of the cable, wherein the cutting device (7) comprises a die (9) with a through bore (10) through which the end (2) of the cable to be processed can be passed coaxially, and wherein the cutting device (7) further comprises a punch (11) which is applied to the die (9) and which is adapted to cut the cable shielding braid (8) in a coaxial manner, which can be fed coaxially to the die (9) in order to cut the exposed cable shielding braid (8) of the end (2) of the cable inserted into the die (9) by means of shearing forces between the punch (11) and the die (9),
**characterized in that**
the die (9) has a contact surface (12) for at least a partial region of the connecting piece (8.1) of the cable shielding braid (8) remaining after the cutting to length, against which the partial region of the connecting piece (8. 1) rests against during the cutting to length, wherein the die (9) and the punch (11) are designed such that the die (9) can penetrate into a bore of the punch (11) during the coaxial feed of the punch (11) or that the punch (11) can penetrate into the through bore (10) of the die (9) during the coaxial feed thereof.

2. The device (1) according to claim 1,
**characterized in that**
the contact surface (12) of the die (9) is an inner surface of the through bore (10) of the die (9).

3. The device (1) according to claim 1 or 2,
**characterized in that**
the cutting device (7) comprises a clamping device (3) for fixing the cable in order to fix the cable at least axially during cutting to length.

4. The device (1) according to claim 3,
**characterized in that**
the clamping device (3) is designed and set up to axially feed the end (2) of the cable to be processed within the cutting device (7), in particular to feed the end (2) of the cable to be processed up to a predefined position (PS) in the through bore (10) of the die (9).

5. The device (1) according to any one of claims 1 to 4,
**characterized in that**
the cutting device (7) has a tong-like tool (13) which can be fed radially to the cable shielding braid (8) and is designed and set up to produce radially circumferential indentations in the cable shielding braid (8), so that the exposed end of the cable shielding braid (8) expands radially.

6. The device (1) according to any one of claims 1 to 5,
**characterized in that**
the cutting device (7) has a sleeve (14) which can be fed axially to the end (2) of the cable to be processed and is designed and set up to be inserted between the exposed cable shielding braid (8) and an underlying sheath (15) of the cable before cutting to length.

7. The device (1) according to claim 6,
**characterized in that**
the sleeve (14) is constructed and arranged to bring the cable shielding braid (8) into force-locking contact with the contact surface (12) of the die (9).

8. A method of machining an end (2) of an electric cable, according to which a cable shielding braid (8) exposed in the region of the end (2) of the cable to be machined is cut to length by means of a cutting device (7) and is thereby divided into a cutting piece (8.1) to be removed and a connecting piece (8.2) remaining at the end (2) of the cable, wherein the end (2) of the cable to be processed is first passed coaxially through a through bore (10) of a die (9) and then a punch (11) is coaxially fed to the die (9), which punch cuts the exposed cable shielding braid (8) of the end (2) of the cable passed through the die (9) by means of shearing forces,
**characterized in that**
at least a partial area of the connecting piece (8.2) of the cable shielding braid (8) remaining after the cutting to length is applied to a contact surface (12) of the die (9) during the cutting to length, wherein
- a front portion (16) of the die (9) penetrates into a bore of the punch (11) during the cutting to length of the cable shielding braid (8); or
- the punch (11) penetrates the through bore (10) of the die (9) during the coaxial feed thereof.

9. The method according to claim 8,
**characterized in that**
a nominal length (LS) of the connecting piece (8.2) of the cable shielding braid (8) remaining after the cutting to length is determined by an axial positioning of the cable at a predefined position (PS) in the through hole (10).

10. The method according to claim 8 or 9,
**characterized in that**
the exposed cable shield braid (8) is cut to length along the cable in a plurality of steps.

11. The method according to any one of claims 8 to 10,
**characterized in that**
a sleeve (14) is inserted between the exposed cable shielding braid (8) and an underlying sheath (15) of the cable, which sleeve (14) expands the cable shielding braid (8) radially preferably before the cable is cut to length and/or which sleeve (14) applies the cable shielding braid (8) to the contact surface (12) of the matrix (9) in a force-fitting manner.

12. A cable assembly system (18) comprising a device (1) for processing at least one end (2) of a cable according to one of claims 1 to 7, and
- means (19) for partially exposing a cable shielding braid (8) of an electric cable in the region of at least one end (2) of the cable to be processed; and/or
- a device (20) for mounting a connector on the at least one end (2) of the cable to be machined; and/or
- a device (21) for cutting the cable to length.

## Revendications

1. Dispositif (1) pour le traitement d'une extrémité (2) d'un câble électrique, comprenant un dispositif de coupe (7) pour couper à la longueur une tresse de blindage de câble (8) mise à nu dans la zone de l'extrémité (2) à traiter du câble, afin de diviser la tresse de blindage de câble (8) en une pièce de coupe (8.1) à enlever et une pièce de raccordement (8.2), le dispositif de coupe (7) présentant une matrice (9) avec un trou de passage (10) à travers lequel l'extrémité (2) à traiter du câble peut être traversée coaxialement, et le dispositif de coupe (7) présentant en outre un poinçon (11), qui peut être approché coaxialement de la matrice (9) afin de découper la tresse de blindage de câble (8) dégagée de l'extrémité (2) du câble introduite dans la matrice (9) au moyen de forces de cisaillement entre le poinçon (11) et la matrice (9),
**caractérisé en ce que**
la matrice (9) présente une surface d'appui (12) pour au moins une zone partielle de la pièce de raccordement (8.1) de la tresse de blindage du câble (8) restant après le tronçonnage, sur laquelle la zone partielle de la pièce de raccordement (8.1) pendant le tronçonnage, la matrice (9) et le poinçon (11) étant conçus de manière à ce que la matrice (9) puisse pénétrer dans un alésage du poinçon (11) pendant l'avance coaxiale du poinçon (11) ou que le poinçon (11) puisse pénétrer dans l'alésage de passage (10) de la matrice (9) pendant son avance coaxiale.

2. Dispositif (1) selon la revendication 1,
**caractérisé en ce que**
la surface d'appui (12) de la matrice (9) est une surface intérieure du trou traversant (10) de la matrice (9).

3. Dispositif (1) selon la revendication 1 ou 2,
**caractérisé en ce que**
le dispositif de coupe (7) comprend un dispositif de serrage (3) pour fixer le câble, afin de fixer le câble au moins axialement pendant la mise à longueur.

4. Dispositif (1) selon la revendication 3,
**caractérisé en ce que**
le dispositif de serrage (3) est conçu et agencé pour avancer axialement l'extrémité à traiter (2) du câble à l'intérieur du dispositif de coupe (7), en particulier pour avancer l'extrémité à traiter (2) du câble jusqu'à une position prédéfinie (PS) dans le trou traversant (10) de la matrice (9).

5. Dispositif (1) selon l'une des revendications 1 à 4,
**caractérisé en ce que**
le dispositif de coupe (7) comporte un outil (13) en forme de pince pouvant être approché radialement de la tresse de blindage de câble (8), qui est conçu et agencé pour produire des enfoncements radiaux périphériques dans la tresse de blindage de câble (8), de sorte que l'extrémité dégagée de la tresse de blindage de câble (8) s'élargit radialement.

6. Dispositif (1) selon l'une des revendications 1 à 5,
**caractérisé en ce que**
le dispositif de coupe (7) comporte un manchon (14) pouvant être approché axialement de l'extrémité (2) à traiter du câble, ledit manchon étant configuré et agencé pour être inséré entre la tresse de blindage (8) du câble mise à nu et une gaine (15) du câble située en dessous, avant la mise à longueur.

7. Dispositif (1) selon la revendication 6,
**caractérisé en ce que**
la douille (14) est conçue et aménagée pour amener la tresse de blindage de câble (8) en contact par adhérence avec la surface d'appui (12) de la matrice (9).

8. Procédé de traitement mécanique d'une extrémité (2) d'un câble électrique, selon lequel une tresse de blindage de câble (8) mise à nu dans la zone de l'extrémité (2) à traiter du câble est coupée à longueur au moyen d'un dispositif de coupe (7) et est ainsi divisée en une pièce de coupe (8.1) à enlever et une pièce de raccordement (8.2) restant sur l'extrémité (2) du câble. 2), l'extrémité (2) à traiter du câble étant tout d'abord passée coaxialement à travers un trou de passage (10) d'une matrice (9) et un poinçon (11) étant ensuite approché coaxialement de la matrice (9), lequel coupe la tresse de blindage de câble (8) mise à nu de l'extrémité (2) du câble passée à travers la matrice (9) au moyen de forces de cisaillement,
**caractérisé en ce que**
au moins une zone partielle de la pièce de raccordement (8.2) de la tresse de blindage de câble (8) restant après le tronçonnage est appliquée contre une surface d'appui (12) de la matrice (9) pendant le tronçonnage, où
- une partie avant (16) de la matrice (9) pénètre dans un alésage du poinçon (11) pendant la mise à longueur de la tresse de blindage de câble (8) ; ou
- le poinçon (11) pénètre dans le trou traversant (10) de la matrice (9) pendant son avance coaxiale.

9. Procédé selon la revendication 8,
**caractérisé en ce que**
une longueur de consigne (LS) de la pièce de raccordement (8.2) de la tresse de blindage du câble (8) restant après le tronçonnage est déterminée par un positionnement axial du câble à une position prédéfinie (PS) dans le trou traversant (10).

10. Procédé selon la revendication 8 ou 9,
**caractérisé en ce que**
la tresse de blindage de câble (8) exposée est coupée à longueur le long du câble en plusieurs étapes.

11. Procédé selon l'une quelconque des revendications 8 à 10,
**caractérisé en ce que**
un manchon (14) est inséré entre la tresse de blindage de câble (8) dégagée et une gaine (15) du câble située en dessous, lequel élargit radialement la tresse de blindage de câble (8) de préférence avant le tronçonnage et/ou qui applique la tresse de blindage de câble (8) par adhérence sur la surface d'appui (12) de la matrice (9).

12. Système de confection de câbles (18), comprenant un dispositif (1) pour traiter au moins une extrémité (2) d'un câble selon l'une des revendications 1 à 7, ainsi que
- un dispositif (19) pour dégager partiellement une tresse de blindage (8) d'un câble électrique dans la zone d'au moins une extrémité (2) à traiter du câble ; et/ou
- un dispositif (20) pour le montage d'un connecteur sur l'au moins une extrémité (2) à traiter du câble ; et/ou
- un dispositif (21) pour couper le câble à la longueur voulu
